Europäisches Patentamt

European Patent Office

Office européen des brevets

(19)

(11) Numéro de publication: **0 255 447 B1**

(12) **FASCICULE DE BREVET EUROPEEN**

(45) Date de publication de fascicule du brevet:
**09.10.91**

(51) Int. Cl.5: **B65D 81/02**, B65D 81/38

(21) Numéro de dépôt: **87401787.4**

(22) Date de dépôt: **30.07.87**

(54) **Caisse d'emballage réutilisable pour bouteilles en verre notamment de vins et spiritueux.**

(30) Priorité: **30.07.86 FR 8611045**

(43) Date de publication de la demande:
**03.02.88 Bulletin 88/05**

(45) Mention de la délivrance du brevet:
**09.10.91 Bulletin 91/41**

(84) Etats contractants désignés:
**AT BE CH DE ES GB IT LI LU NL**

(56) Documents cités:
**CH-A- 392 377       FR-A- 1 258 696**
**GB-A- 867 467       US-A- 4 438 637**
**US-A- 4 446 705      US-A- 4 533 050**

(73) Titulaire: **BARON PHILIPPE DE ROTHSCHILD S.A.**
**Rue de Grassi**
**F-33250 Pauillac(FR)**

(72) Inventeur: **de Rothschild, Baron Philippe**
**Château Mouton Rothschild**
**F-33250 Pauillac(FR)**

(74) Mandataire: **Kügele, Bernhard et al**
**NOVAPAT-CABINET CHEREAU 63 bis, boulevard Bessières**
**F-75017 Paris(FR)**

## Description

La présente invention a pour objet une caisse d'emballage pour bouteilles en verre notamment des bouteilles de vins et spiritueux qui permet le stockage par empilage tout en laissant le libre accès au contenu de chacune des caisses.

Généralement, les vins et spiritueux de qualité sont expédiés et transportés dans des caisses en bois. Le nombre de bouteilles par colis peut varier de deux à trois, six ou douze bouteilles qui sont généralement isolées les unes des autres de façon à ne pas se briser durant le transport. Les bouteilles sont disposées horizontalement de façon à ce que le bouchon soit toujours au contact du produit et ne puisse pas se déssécher. Une fois les bouteilles couchées au fond de la caisse, le couvercle à la partie supérieure est généralement cloué ou agrafé. Si de tels emballages sont parfaitement adaptés aux différentes conditions de transport, il reste néanmoins un problème lors du stockage de ces produits. En effet, les caisses sont généralement empilées les unes sur les autres et il apparaît clairement qu'il est impossible d'avoir accès au contenu des différentes caisses à moins d'effectuer de nombreuses manutentions, seul étant permis l'accès à la caisse supérieure.

On connaît le brevet français 2.473.469 qui permet de transformer une caissette de transport en un dispositif de stockage des bouteilles de façon à constituer par empilage une cave modulaire. Les bouteilles initialement disposées suivant la plus grande longueur de la caissette sont extraites de ladite caissette après en avoir ôté le couvercle supérieur qui peut coulisser dans deux rainures parallèles, puis ces bouteilles sont disposées perpendiculairement à la plus grande longueur à travers l'une des faces latérales qui est munie de trous prévus pour laisser passer chacune des bouteilles. Par ailleurs, des berceaux destinés à recevoir ces bouteilles sont également pivotés de 90° de façon à pouvoir supporter les bouteilles dans leur nouvelle position. Le produit est stocké et accessible en permanence puisqu'une partie de la bouteille, généralement le goulot, reste extérieur à la caissette.

On constate que les diverses manutentions et les divers déplacements du produit de façon à le mettre dans la position adéquate ne sont pas compatibles avec les besoins de stockage importants tant chez les producteurs que chez les différents grossistes et revendeurs. De même, le fait que les bouteilles aient une partie dépassante n'est pas souhaitable dans la profession.

On connaît, en outre, le brevet suisse 392 377 qui concerne un conditionnement de bouteilles, formé d'éléments emboîtables constitués par un carter allongé parallélépipèdique, percé à l'intérieur d'alvéoles pour recevoir les bouteilles.

Ce conditionnement de bouteilles n'est utilisable que pour le stockage et non pour le transport; en effet, il ne comprend qu'une structure en contact avec les bouteilles et aucune structure extérieure protégeant cet ensemble. En outre, lors du stockage, les éléments sont emboîtés les uns sur les autres sans aucun moyen de préhension manuelle d'un élément dans l'empilage.

La présente invention a donc pour but de proposer une caisse d'emballage réutilisable pour bouteilles en verre contenant des liquides, destinée à leur transport, à leur protection mécanique et à la diminution des chocs thermiques tout en permettant un stockage par empilage avec accès au contenu de chacune des caisses qui constitue une pile et possibilité de préhension manuelle des caisses, constituée d'un volume de matière isolante dans lequel sont ménagés des évidements et d'une structure extérieure rigide parallélépipèdique dont l'une des faces est amovible et contient également une plaque d'une matière isolante, caractérisée en ce que le volume de matière isolante est constitué d'un bloc parallélépipèdique dont les évidements sont cylindriques, la face amovible de ladite structure extérieure rigide étant l'une des parois latérales sur lesquelles débouchent ces évidements et en ce que la plaque de matière isolante de la face amovible contient deux rainures prévues pour recevoir deux cales amovibles.

De façon à ne pas exposer le produit à des variations de températures instantanées, trop importantes, l'emballage est prévu pour que chacune des bouteilles soit totalement isolée de l'extérieur. A cet effet, des plaques de matériau isolant sont disposées aux deux extrémités du volume en matière isolante obturant ainsi les ouvertures par lesquelles sont introduites les bouteilles.

Selon une autre caractéristique de l'invention, la face latérale amovible est reliée au reste de la structure extérieure parallélépipédique à l'aide de clips. Par ailleurs, selon l'invention, le volume en matière isolante est muni de rainures débouchantes permettant de faire varier légèrement le diamètre disponible pour l'introduction de bouteilles, facilitant cette introduction mais aussi permettant également lors de ce mouvement de ne pas détruire les différents supports d'informations tels que les étiquettes ou autres cachets.

De façon à faciliter le transport notamment par les techniques modernes qui utilisent des palettes, les cales d'appui sont amovibles et disposées lorsqu'elles sont inutilisées, dans la caisse elle-même.

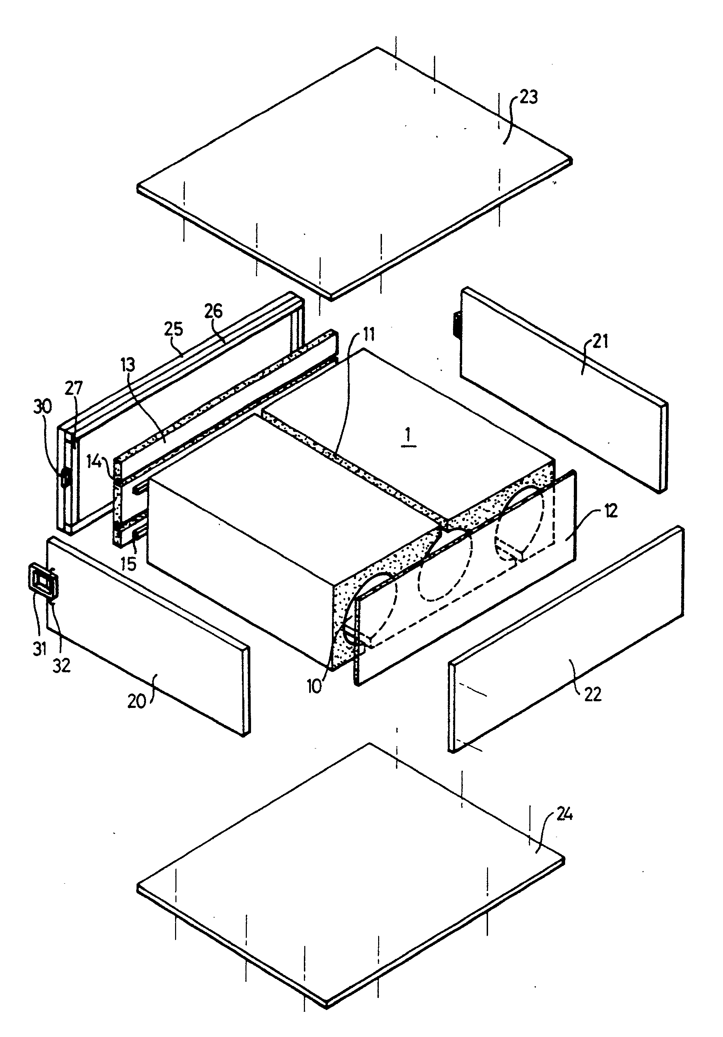

On va maintenant décrire un mode de réalisation d'une caisse selon l'invention qui fera apparaître d'autres avantages liés à la conception selon l'invention, cette description étant faite en relation avec la figure unique annexée qui représente une vue éclatée de la caisse selon l'invention.

Le volume en matière isolante 1 est constitué d'un bloc parallélépipédique dans lequel sont découpés des évidements cylindriques 10. Un matériau pouvant convenir à cette application est le polystyrène. Chacun des évidements possède en outre une rainure débouchante 11 réalisée suivant la génératrice tangente à l'une des faces supérieures ou inférieures. Ces rainures sont prévues pour être disposées en quinconce, c'est-à-dire débouchant alternativement sur l'une ou l'autre des faces supérieures ou inférieures. Elles peuvent être obtenues directement par la forme de l'outil destiné à réaliser les évidements. Une plaque isolante 12 est rapportée sur l'une des faces de la structure isolante perpendiculairement à l'axe longitudinal des évidements. Sur la face opposée une autre plaque isolante 13 assure la fermeture des évidements cylindriques à leurs autres extrémités. Cette plaque isolante 13 est munie de deux évidements 14 dont le profil est à section carrée et dont l'orientation est parallèle à la plus grande longueur de ladite plaque. Ces évidements sont destinés à recevoir des cales en bois 15 dont le profil complémentaire leur permet une introduction totale et une fois en place ces cales sont parfaitement encastrées. La caisse en bois proprement dite est constituée de trois faces latérales 20, 21 et 22 ainsi que deux couvercles supérieur 23 et inférieur 24 destinés à former une structure externe parallélépipédique. Ces cinq éléments sont assemblés de façon classique par vis, clous, ou agrafes. La quatrième face latérale est utilisée comme couvercle amovible. Celui-ci est constitué d'une plaque 25 et de barrettes telles que 26 et 27 qui sont rapportées sur la face dirigée ver l'intérieur de la caisse. Ces barrettes ont une épaisseur telle qu'elles définissent un cadre et qu'elles peuvent contenir toute entière la plaque isolante 13 et les cales 15.

La liaison de ce couvercle et de l'ensemble de la structure parallélépipédiques est réalisée par un tenon 30 rapporté sur la barrette 27 qui coopère avec un clip 31 solidaire de la face latérale 20 et monté sur un axe 32 de façon à pouvoir pivoter.

La caisse une fois montée laisse donc libre accès à l'utilisateur, par l'une de ses faces latérales.

Lors de la mise en place à la production, les caisses sont donc disposées verticalement face ouverte vers le haut et les bouteilles sont introduites verticalement dans les différentes caisses. Le couvercle est alors rapporté sur la face ouverte de façon à l'obturer et les clips sont rabattus sur le tenon. La caisse peut alors être disposée horizontalement sur l'une de ses faces 23 ou 24 et les caisses peuvent alors être empilées. Suivant les modes de stockage, les cales en bois sont extraites du couvercle ou laissées en place.

Dans le cas de palette devant être mise sous film ou pour le transport en conteneur, les barrettes ne sont pas utilisées et les caisses sont en appui les unes sur les autres, la suppression de l'espace entre les caisses permettant un gain de place.

Par contre, lors de stockage longue durée en entrepôt, pour faciliter la préhension manuelle ou par engin de manutention, les barrettes sont extraites du couvercle et disposées sous la caisse.

Les différents stockages de durée variable doivent permettre l'accès aux différentes caisses de façon à en vérifier le contenu ou à ponctionner certains des éléments contenus pour vérification des lots par exemple. Dans ce cas, sans démanteler l'empilage, il suffit de débloquer les clips d'ôter le couvercle amovible et de retirer par glissement la bouteille désignée. On constate par ailleurs, que chaque bouteille est parfaitement enveloppée dans la matière isolante tant sur sa surface extérieure qu'à ses deux extrémités goulot et cul, ce qui limite les variations trop rapides de température.

Une fois vidée de l'ensemble de son contenu, la caisse peut alors être réutilisée puisqu'elle n'a subi aucune dégradation.

L'invention n'est bien sûr par limitée aux modes de réalisation qui viennent d'être décrits. Dans l'exemple qui vient d'être donné, l'ouverture réalisée par le petit côté peut bien évidemment être réalisée sur le grand côté. De la même façon, les clips peuvent être remplacés par tous moyens adaptés tels que genouillères, crochets ou autres équivalents techniques réalisant la même fonction et donnant le même résultat. De même, le matériau synthétique utilisé dans l'exemple particulier qui est du polystyrène peut être remplacé par toute autre matière synthétique adéquate générant une protection mécanique et thermique. De la même façon, les cales peuvent être disposées en tout endroit convenable à l'intérieur de la caisse.

**Revendications**

1. Caisse d'emballage permettant un stockage par empilage avec accès au contenu de chaque caisse de l'empilage, constituée d'un volume de matière isolante (1) dans lequel sont aménagés des évidements (10) et d'une structure extérieure rigide (20, 21, 22, 23, 24, 25) parallélépipédique dont l'une des faces (25) est amovible et contient également une plaque de matière isolante (13), caractérisée en ce que le volume de matière isolante est constitué d'un bloc parallélépipèdique dont les évidements sont cylindriques, la face amovible de ladite structure extérieure rigide étant l'une des parois latérales sur lesquelles débouchent ces évidements et en ce que la plaque de matière isolante (13) de la face amovible (25) contient deux rainures (14) prévues pour recevoir deux cales amovibles (15).

2. Caisse d'emballage selon la revendication 1, caractérisée en ce que le volume en matière isolante est muni de rainure d'élasticité (11).

3. Caisse d'emballage selon la revendication 1, caractérisée en ce que l'on interpose une feuille de matière isolante entre la face latérale opposée à la face amovible et le volume en matière isolante.

4. Caisse d'emballage selon l'une quelconque des revendications 2 ou 3, caractérisée en ce que la matière isolante est du polystyrène.

5. Caisse d'emballage selon la revendication 1, caractérisée en ce que la face amovible (25) est reliée à deux faces latérales (20, 21) de la structure extérieure par des clips latéraux (31) fixés sur les faces latérales (20 et 21) venant bloquer un tenon tel que (30) solidaire de ladite face amovible.

6. Caisse d'emballage selon la revendication 1, caractérisée en ce que la face amovible (25) est reliée à la structure extérieure par des crochets.

7. Caisse d'emballage selon l'une quelconque des revendications précédentes, caractérisée en ce que les cales et la structure extérieure parallélépipèdique sont réalisées en bois.

## Claims

1. A packing case adapted to pilingly stocking with access to the contents of each piled case, including an insulating material volume (1), wherein recesses (10) are made and an external parallelepipedic rigid structure (20, 21, 22, 23, 24, 25), one face of which (25) is movable and also includes a plate made of insulating material (13); characterized in that said insulating material volume comprises a parallelepipedic block, the recesses of which have a cylindrical shape, said movable face of said external rigid structure being one of the side walls into which said recesses open, and in that said plate made of insulating material (13) of said movable face (25) includes two grooves (14) provided with a view to receiving two movable wedges (15).

2. The packing case as recited in claim 1, characterized in that said insulated material volume is provided with elasticity grooves (11).

3. The packing case as recited in claim 1, characterized in that a sheet from insulating material is interposed between the side face opposed to said movable face and said insulating material volume.

4. The packing case as recited in any claims 2 or 3, characterized in that said insulating material comprises polystyrene.

5. The packing case as recited in claim 1, characterized in that said movable face (25) is connected to two side faces (20, 21) of said external structure by side clips (31) which are fixed to said side faces (20 and 21) to lock a lug (30) integral with said movable face.

6. The packing case as recited in claim 1, characterized in that said movable face (25) is connected to said external structure by hooks.

7. The packing case as recited in any preceding claim, characterized in that said wedges and said parallelepipedic external structure are made of wood.

## Patentansprüche

1. Verpackungskiste, bei der trotz Stapeln der Zugang zum Inhalt jeder Kiste möglich ist, mit einem Körper (1) aus Isoliermaterial, in welchem Aussparungen (10) angeordnet sind, und einer festen Außenhülle (20, 21, 22, 23, 24, 25) mit parallelen Flächen, von denen eine (25) der Flächen entfernbar ist und eine Platte (13) aus Isoliermaterial aufweist,
   **dadurch gekennzeichnet daß**
   - der Körper aus Isoliermaterial ein parallel-epipedischer Block ist, in dem die Aussparungen zylindrisch sind,
   - die entfernbare Fläche (25) des festen Gehäuses eine der gegenüberliegenden Wände ist, welche die Aussparungen freigeben und
   - die Platte (13) aus Isoliermaterial der entfernbaren Platte (25) zwei Nuten (14) zum Aufnehmen von zwei entfernbaren Zwischenlagen (15) vorgesehen sind.

2. Verpackungskiste, nach Anspruch 1,
   **dadurch gekennzeichnet, daß,**
   der Körper aus Isoliermaterial Elastizitätsschlitze (11) aufweist.

3. Verpackungskiste, nach Anspruch 1
   **dadurch gekennzeichnet, daß,**
   zwischen der Fläche, die der entfernbaren Fläche gegenüber angeordnet ist, und dem Körper aus Isoliermaterial eine dünne Schicht aus Isoliermaterial angeordnet ist.

4. Verpackungskiste nach einem der Ansprüche 2 oder 3,
   **dadurch gekennzeichnet, daß,**
   das Isoliermaterial Polystyrol ist.

5. Verpackungskiste nach Anspruch 1,
   **dadurch gekennzeichnet, daß,**
   die entfernbare Fläche (25) mit zwei aneinander gegenüberliegenden Flächen (20, 21) des Gehäuses verbunden ist mittels zwei gegenüberliegenden Klipsen (31), die zum Verriegeln von Zapfen (30) der entfernbaren Fläche an den einander gegenüberliegenden Flächen (20) und (21) angeordnet sind.

6. Verpackungskiste nach Anspruch 1,
   **dadurch gekennzeichnet, daß,**
   die entfernbare Fläche (25) mit dem Gehäuse mittels Haken verbunden ist.

7. Verpackungskiste nach einem der vorhergehenden Ansprüche,
   **dadurch gekennzeichnet, daß,**
   die Zwischenlagen und das parallel-epipedische Gehäuse aus Holz bestehen.